Europäisches Patentamt

European Patent Office

Office européen des brevets

(19)

(11) EP 1 467 177 A1

(12) EUROPEAN PATENT APPLICATION

(43) Date of publication:
13.10.2004 Bulletin 2004/42

(51) Int Cl.$^7$: G01B 11/06

(21) Application number: 04008424.6

(22) Date of filing: 07.04.2004

(84) Designated Contracting States:
AT BE BG CH CY CZ DE DK EE ES FI FR GB GR
HU IE IT LI LU MC NL PL PT RO SE SI SK TR
Designated Extension States:
AL HR LT LV MK

(30) Priority: 09.04.2003 JP 2003104958

(71) Applicant: Mitsubishi Chemical Engineering
Corporation
Minato-Ku, Tokyo (JP)

(72) Inventors:
• Kudou, Shigeki, c/o Mitsubishi chem. Eng. Corp.
Chigasaki-shi, Kanagawa-ken (JP)
• Eki, Kouji, c/o Mitsubishi chem. Eng. Corp.
Chigasaki-shi, Kanagawa-ken (JP)
• Mure, Eita, c/o Mitsubishi chem. Eng. Corp.
Chigasaki-shi, Kanagawa-ken (JP)

(74) Representative: HOFFMANN - EITLE
Patent- und Rechtsanwälte
Arabellastrasse 4
81925 München (DE)

(54) **Method and apparatus for measuring thicknesses of layers of multilayer thin film**

(57) There are provided a multilayer thin film thickness-measuring method and apparatus for use in functional resin films or information electronic materials at high accuracy and instantaneously, which are applicable in production line. A reflected or transmitted light obtained by irradiating white light onto a sample (7) is spectrally dispersed to obtain a spectrum thereof. The spectrum is transformed into a frequency signal which is then subjected to wavelet processing (Daubechies wavelet) to remove components other than coherence signals from the frequency signal, and then the resultant signal is subjected to frequency analysis (fast Fourier transform or maximum entropy method) to detect the thicknesses of layers. The thickness-measuring apparatus includes a light source (1), an irradiating optical fiber (2), a light-receiving optical fiber (3), a monochromator (4), a multi-channel detector (5) and an arithmetic processing means (6).

## FIG.1

4: MONOCHROMATOR

5: MULTI-CHANNEL DETECTOR

6: ARITHMETIC PROCESSING MEANS

3

BIFURCATED FIBER

2

(MULTI - CHANNEL SPECTROSCOPE)

INCIDENT LIGHT L

REFLECTED LIGHT La

7: SAMPLE

1: WHITE LIGHT SOURCE

EP 1 467 177 A1

**Description**

BACKGROUND OF THE INVENTION

The present invention relates to method and apparatus for measuring thicknesses of respective layers of a multilayer thin film, and more particularly, to method and apparatus for measuring thicknesses of respective layers of a multilayer thin film, which are capable of measuring the thicknesses at a higher accuracy and instantaneously, and also applicable to a sample in production line non-destruct.

As a method for measuring thicknesses of respective layers of a light-transmittable multilayer thin film by non-destructive method, the present inventors have previously proposed the "method for detecting a layer thickness of a multilayer thin film" by a fast Fourier transform (FFT) method. In the thickness detection method, a reflected light obtained from a sample by irradiating a white light thereto is spectrally dispersed, and then the resultant reflection spectrum is obtained. Thereafter, the obtained spectrum is processed to transform a waveform thereof into wave number. Then, it is processed by Hanning window and Fast Fourier transform methods to obtain a power spectrum thereof and to determine thicknesses of respective layers of the multilayer thin film. The above method enables the thicknesses of layers of the multilayer thin film to be measured at a higher speed and a higher accuracy as compared to conventional multiple-beam interferometry in which merely an approximate value thereof is obtained by a Newton method (refer to Japanese Patent Application Laid-Open (KOKAI) No. 7-294220(1995)).

Meanwhile, upon processing the reflection spectrum, in some cases, a power spectrum of a specific layer of the thin film tends to be extremely small and exist in a low-frequency range depending upon position and thickness of the layer. When the thin film having such a layer is measured by the above thickness detection method using a fast Fourier transform method, the power spectrum thereof which is buried in a low-frequency range, must be estimated by arithmetically computing the difference between a whole thickness of the thin film and thicknesses of several layers thereof which are directly measurable. Therefore, in the above thickness detection method, the measured thickness of such a layer whose power spectrum is buried in a low-frequency range, tends to become more inaccurate with reduction in the thickness. In addition, the above arithmetic processing of certain kinds of samples tends to require a longer measuring time as compared to the case where the thickness can be directly detected by the power spectrum.

For example, in multilayer thin films recently used in functional resin films or information electronic materials, respective layers thereof have uniform thicknesses, and each thickness is extremely small, for example, as small as less than 1 μm. For this reason, the above thickness detection method tends to be adversely affected even by slight disturbance factors, thereby failing to obtain a sufficient measurement accuracy. In particular, in the case of slightly colored films, a shape of the spectrum thereof tends to be influenced by the color, resulting in poor measurement accuracy, and in the worse case, the measurement will become impossible. Further, it may be difficult to instantaneously measure thicknesses of many portions of the film during transportation thereof through a production line.

SUMMARY OF THE INVENTION

The present invention has been attained in view of the above problems. An object of the present invention is to provide a method suitable for measuring thicknesses of respective layers of a multilayer thin film used in functional resin films or information electronic materials, which is capable of measuring the thicknesses at a higher accuracy and instantaneously, and also applicable to a sample in production line non-destruct. Another object of the present invention is to provide a thickness-measuring apparatus suitably used for conducting the above method.

In the present invention, after a reflection spectrum or transmission spectrum obtained from a sample is transformed into a frequency signal based on wave number units, the frequency signal is first subjected to wavelet processing to remove components other than coherence signals such as absorption spectrum of the sample from the frequency signal, thereby manifesting or revealing trace peak signals buried in a low-frequency range, and then such peak signals are directly detected to determine thicknesses of the respective layers of the sample.

Namely, the present invention includes the following two aspects.

In a first aspect of the present invention, there is provided a method for measuring thicknesses of respective layers of a multilayer thin film, comprising:

irradiating a white light (for example, having a wavelength region of from 500 nm to 1000 nm) on a sample composed of the multilayer thin film;
spectrally dispersing a reflected light or transmitted light obtained from the sample, and transforming the resultant spectrum into a frequency signal based on wave number units; and
subjecting the frequency signal to wavelet processing for removing components other than coherence signals from the frequency signal, and then to frequency analysis for detecting the thicknesses of the respective layers of the thin film.

Also, in a second aspect of the present invention, there is provided an apparatus for measuring thicknesses of respective layers of a multilayer thin film comprising a light source emitting a white light; an irradiating optical fiber for irradiating the light emitted from the light source onto a sample; a light-receiving optical fiber for collecting a reflected light or transmitted light obtained from the sample; a monochromator for spectrally dispersing the light transmitted from the light-receiving optical fiber; a multi-channel detector for transforming a spectrum obtained by spectrally dispersing the light, into an electric signal; and an arithmetic processing means for transforming the electric signal output from the multi-channel detector into a frequency signal based on wave number units and subjecting the frequency signal to an arithmetic processing, said arithmetic processing means having a function for subjecting the frequency signal to wavelet processing for removing components other than coherence signals from the frequency signal, and then to frequency analysis for detecting the thicknesses of respective layers of the thin film.

BRIEF DESCRIPTION OF THE DRAWINGS

Fig. 1 is a block diagram showing an example of a thickness-measuring apparatus according to the present invention.
Fig. 2 is a schematic sectional view showing a layer structure of a sample.
Fig. 3 is a graph showing examples of waveforms of signals obtained by subjecting a frequency signal obtained from a spectrally dispersed spectrum to wavelet processing.
Fig. 4 is a graph showing an example of a power spectrum obtained by after a wavelet processing, Maximum Entropy Method (MEM) that has the highest resolusion in a field of a frequency analysis, upon measuring thicknesses of layers of a functional resin film.

DETAILED DESCRIPTION OF THE INVENTION

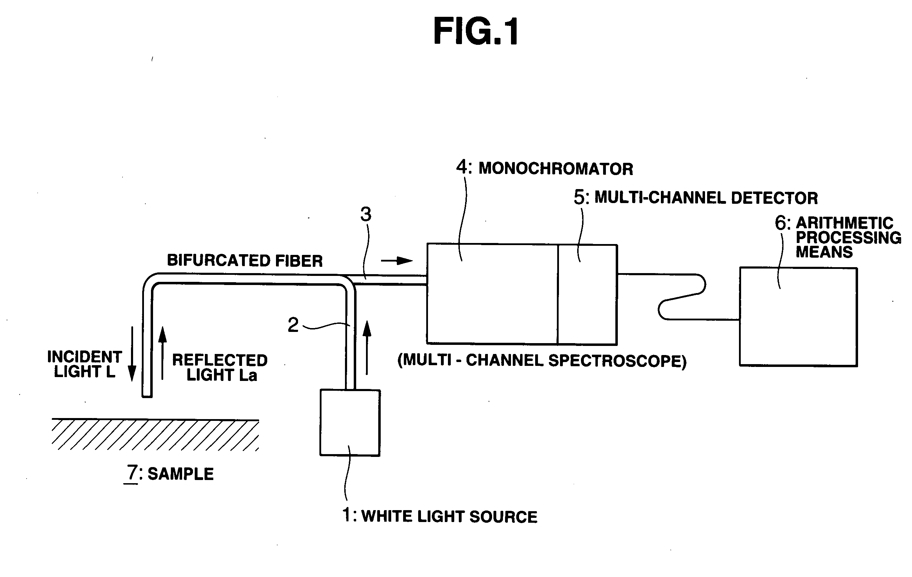

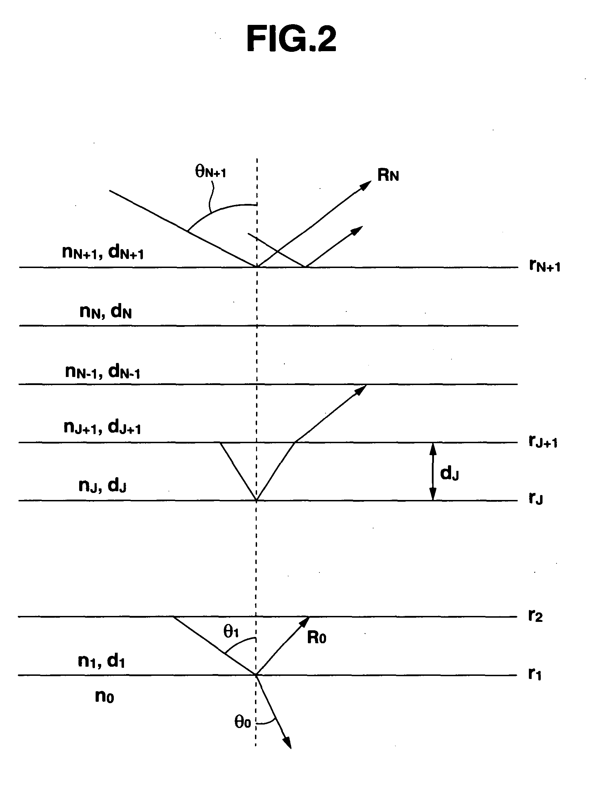

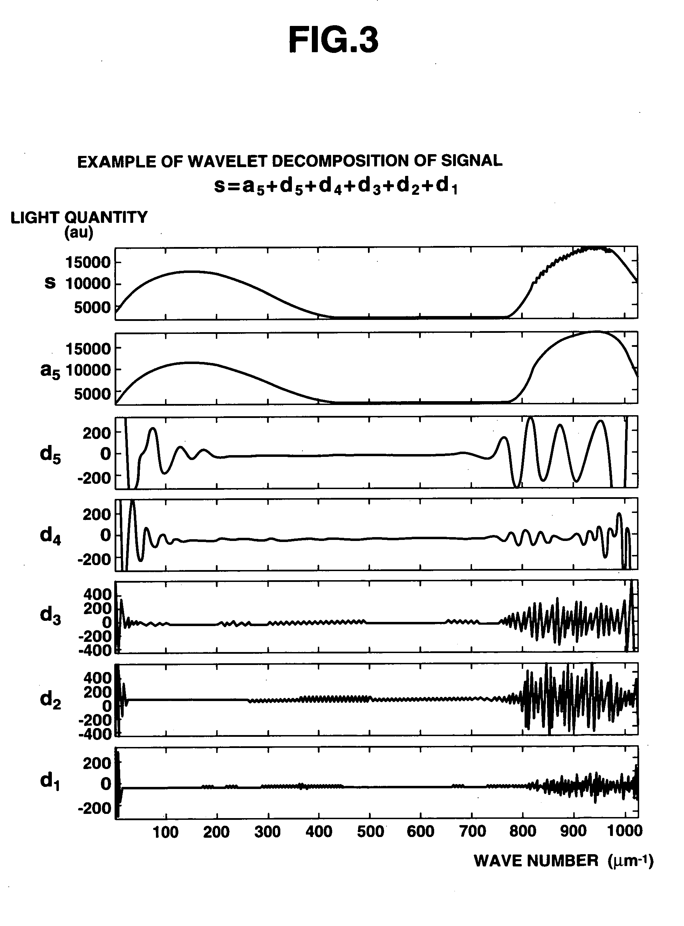

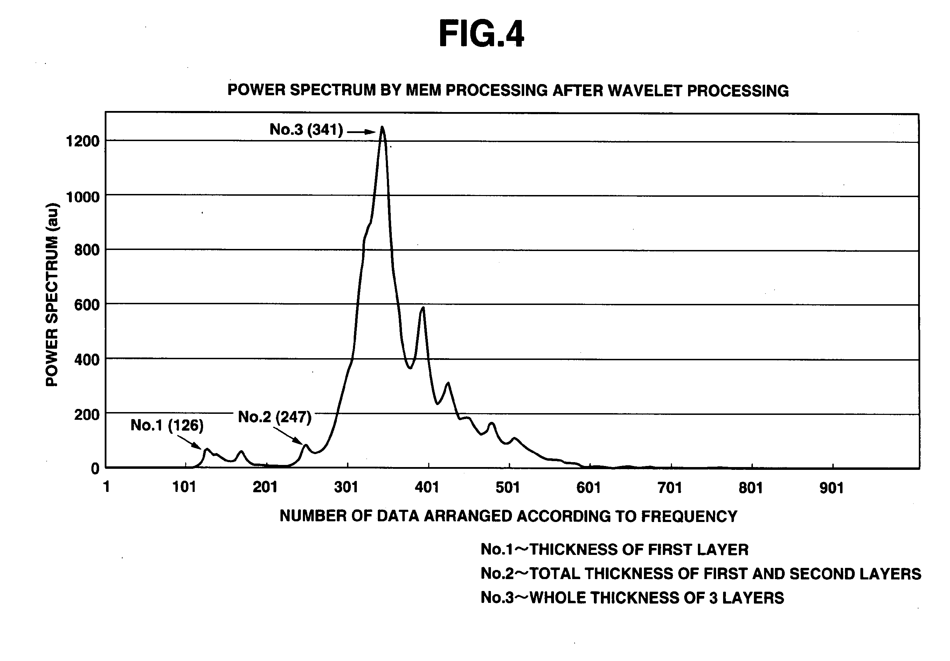

The preferred embodiment of the method and apparatus for measuring thicknesses of layers of a multilayer thin film according to the present invention is explained with reference to the accompanying drawings. Fig. 1 is a block diagram showing an example of a thickness-measuring apparatus according to the present invention, Fig. 2 is a schematic sectional view of a layer structure of a sample, Fig. 3 is a graph showing examples of waveforms of signals obtained by subjecting a frequency signal obtained from a spectrally dispersed spectrum to wavelet processing, and Fig. 4 is a graph showing an example of a power spectrum obtained by MEM after the wavelet processing upon measuring thicknesses of layers of a functional resin film.

For the purpose of explaining the thickness-measuring method according to the present invention, the thickness-measuring apparatus of the present invention suitable for practicing the thickness-measuring method, in which a reflected light obtained from the film is used therefor, is first explained. As shown in Fig. 1, the thickness-measuring apparatus of the present invention is mainly constituted by a light source (1) emitting a white light; an irradiating optical fiber (2) for irradiating the light emitted from the light source onto a sample (7); a light-receiving optical fiber (3) for collecting a reflected light obtained from the sample (7); a monochromator (4) for spectrally dispersing the light (reflected light) transmitted from the light-receiving optical fiber; a multi-channel detector (5) for transforming a spectrum obtained by spectrally dispersing the light into an electric signal; and an arithmetic processing means (6) for transforming the electric signal output from the multi-channel detector into a frequency signal based on wave number units and further subjecting the frequency signal to an arithmetic processing.

As the light source (1), there may be used various white light sources by which a reflected light having a measurable intensity is obtainable. Among these light sources, electronic discharge flash apparatuses for photographing, so-called stroboscopes, are suitably used for obtaining a number of measurement data from a sample moving at a high speed. The stroboscopes are preferably capable of emitting a light for a radiation period of 5 to 15 μsec at intervals of not less than 15 msec in consideration of sensitivity of a sensor used in the multi-channel detector (5), a time required for the latter-stage arithmetic processing, etc. The emitting intervals of the light source (1) can be determined by a control circuit used therefor.

As the irradiating optical fiber (2) and the light-receiving optical fiber (3), there may be used different optical fibers from each other. In order to facilitate positioning of tip ends of the respective optical fibers and simplify a structure of the apparatus, there may be preferably used a bifurcated fiber having a such a structure that the irradiating optical fiber (2) and the light-receiving optical fiber (3) are combined into one fiber at a tip end side thereof, as shown in Fig. 1. Further, as the irradiating optical fiber (2), i.e., the above bifurcated fiber, there may be used such an optical fiber capable of irradiating a light having a spot diameter of 0.5 to 1.5 mm in consideration of resolution of the sensor used in the multi-channel detector (5).

As well known in the art, the monochromator (4) is a device for conducting spectral resolution or factorization of an incident light, which is constituted by prism or diffraction grating. The multi-channel detector (5) is provided with a CCD sensor capable of transforming a spectrum of the light into an electric signal and outputting the electric signal. The monochromator (4) and the multi-channel detector (5) are integrated, and are a known an apparatus as a multi-channel spectroscope.

In the present invention, in order to further enhance a resolution accuracy of peaks of a power spectrum of the spectrally dispersed light, the CCD sensor used in the multi-channel detector (5) has plural rows of pixel arrays, and can transform the spectrum into such a signal obtained by integrating respective peaks of the spectrum by the number of the plural rows of pixel arrays. For example, as the CCD sensor, there may be used CCD having 128 rows each composed of 1024 pixel arrays. Such a CCD sensor is commercially available, for example, as one stage air-cooled 1k-pixel CCD sensor of a back incident type manufactured by Hamamatsu Hotonics Co., Ltd.

The arithmetic processing means (6) is constituted by an information processing apparatus such as computers. The arithmetic processing means (6) is such a means for transforming the electric signal output from the multi-channel detector (5) into a signal based on wave number units which are regarded as a frequency signal, and subjecting the frequency signal to an arithmetic processing. In the present invention, the arithmetic processing means (6) has a function for subjecting the frequency signal to wavelet processing for removing components other than coherence signals from the frequency signal, and then to frequency analysis for detecting the thicknesses of respective layers of the thin film.

Next, the thickness-measuring method of the present invention together with the above function of the arithmetic processing means (6) in the thickness-measuring apparatus are explained below. The thickness-measuring method of the present invention is a method of detecting thicknesses of respective layers of the sample (7) having a light-transmittable multilayer thin film by a non-destructive method using the above thickness-measuring apparatus.

As the sample (7), there may be exempified, for example, a functional resin film. Such a functional resin film is constituted, for example, by a thin film having three layers whose intermediate layer may be made of a film having a specific function such as oxygen-barrier property. The intermediate layer has a thickness of several $\mu m$ and interposed between protective layers laminated on opposite sides thereof. As to the functional resin film having the above structure, it is required to measure thicknesses of the respective layers thereof at a still higher accuracy from the viewpoint of quality control.

Meanwhile, in the following descriptions, the sample (7) having a layer structure shown in Fig. 2 is explained by appropriately referring to Fig. 2. In the layer structure shown in Fig. 2, reference characters $d_1$, $d_2$ ... $d_n$ represent thicknesses of respective layers formed on the surface of a base material, reference characters no, $n_1$, $n_2$ $\cdots$ $n_N$ represent refractive indices of the base material and the respective layers formed thereon, and reference character $n_{N+1}$ represents a refractive index of air present on the surface of the sample (7).

In the thickness-measuring method of the present invention, the surface of the sample (7) having a multilayer thin film is first irradiated with a white light emitted from the light source (1) through the optical fiber (2) in the vertical direction ($\theta=0$). At this time, in order to ensure a sufficient coherence by a reflected light and obtain a sufficient amount of the reflected light, the white light is irradiated on the sample such that a spot diameter thereof is 0.5 to 1.5 mm. Further, the white light is irradiated on the sample (7) using a stroboscope as the light source (1) such that the sample is exposed to the white light for a radiation period of 5 to 15 $\mu sec$ and at intervals of not less than 15 msec. The light reflected from the sample (7) is collected by the optical fiber (3) though which the light is then introduced into the multi-channel spectroscope where the light is spectrally dispersed by the monochromator (4).

Next, the spectrum obtained by the spectral dispersion using the monochromator (4) is transformed into an electric signal by the multi-channel detector (5). More specifically, an intensity of the spectrally dispersed spectrum is detected by the multi-channel detector (5) to obtain a signal indicating the intensity of the spectrally dispersed spectrum. In the multi-channel detector (5), in order to further enhance the resolution accuracy of peaks of a power spectrum of the spectrally dispersed light, the CCD sensor of a back incident type, which has plural rows of pixel arrays as described above, is used to transform the spectrum into such a signal obtained by integrating peaks of the spectrum by the number of plural rows of pixel arrays.

Then, the electric signal obtained by the multi-channel detector (5) is introduced into the arithmetic processing means (6) where the electric signal is transformed into a signal based on wave number units, and the signal that is regarded as a frequency signal is subjected to a frequency analysis.

When a reflection spectrum in the wavelength range is transformed into the frequency signal as described above, the signal in the wavelength range is converted into an inverse number of the wavelength ($\lambda$), namely, a wave number ($\sigma$). In this case, on the basis of the relationship represented by the formula: d (layer thickness) = $(1/2n)(\Delta\sigma)^{-1}$, wherein n is a refractive index, the layer thickness d depends only upon a difference between the wave numbers, i.e., $\Delta\sigma = \sigma_1 - \sigma_2$ ($\sigma_i = \lambda_i^{-1}$, i = 1, 2), and is independent from the wavelength ($\lambda 1$) upon initiation of the measurement as indicated by the following formula (1):

$$d = (m / 2n) (1/\cos\theta) (1/\Delta\sigma) \tag{1}$$

wherein m = 1 and θ represents an angle of refraction.

Meanwhile, the wavelengths at starting point and end point for using the above formula upon calculation correspond to respective positions of the adjacent peaks.

In the present invention, in order to manifest or reveal a trace peak signal buried in a low-frequency range, the obtained frequency signal is first subjected to processing by wavelet having a compact support in a normalized orthogonal system, specifically to a multiple resolution analysis processing, in order to remove components other than coherence signals, for example, components corresponding to absorption spectrum of the sample (7), from the frequency signal. Here, the "compact support" means such a range in which the wavelet function is not zero.

More specifically, a whole signal S obtained by transforming the reflection spectrum into the signal in the wave number range is represented by the following formula (2):

$$S = a_n + d_n + d_{(n+1)} + ... + d_1 \tag{2}$$

wherein $a_n$ represents the n-th approximation signal; $d_n$ represents the n-th detail signal.

When the frequency signal in the wave number range is subjected to the above wavelet processing, it is possible to remove the absorption spectrum, etc. (components other than coherence signals) from the whole frequency signal, and obtain a signal $(S - a_n)$, in other words, a signal composed of only detail signals $(d_n + d_{(n-1)} + ... + d_1)$.

The wavelet function used for the wavelet processing is known in the art. For example, there may be used the Daubechies wavelet represented by the following general formula (3-1):

$$\Psi(x) = \sum_{n=0}^{2N-1} \beta_n \sqrt{2}\, \varphi\, (2x - n) \tag{3-1}$$

wherein $\beta_n$ is given by the following formula (3-2):

$$\beta_n = (-1)^n \alpha_{2N-1-n} \tag{3-2}$$

wherein $\alpha_n$ satisfies the following formula (3-3) :

$$\sum_{m=n}^{2N-1} \alpha_n \alpha_{n+2k} = \delta_{k0},\ k \in Z \tag{3-3}$$

When the frequency signal is subjected to the above wavelet processing, it is possible to remove the components other than coherence signals therefrom, and manifest or reveal the trace peak signal buried in a low-frequency range, as described above. The whole signal S obtained by transforming the reflection spectrum into the signal in the wave number range, as well as detail signals obtained after the wavelet processing are illustratively shown in Fig. 3.

Meanwhile, in the above wavelet processing, the order and decomposition level as parameters of the processing are appropriately preset according to the thicknesses of respective layers of the sample (7). For example, when the layer thickness is in the range of about 20 to 40 μm, the order and decomposition level may be preset to about 16 to 20 and about 5 to 8, respectively.

Upon the presetting of the order in the wavelet, as the order is increased, the resultant signal can be approximated to the initial signal. However, when the order is enhanced to a more than necessary level, the signal tends to be considerably influenced by noises. Therefore, it is required to determine the order in the wavelet by evaluating the interrelation between each order and the whole signal S in consideration of properties of the sample (7). On the other hand, the decomposition level in the wavelet may be determined as follows. That is, after determining the order, a wave form of the approximate signal $a_n$ in the above whole signal S is evaluated by increasing the order sequentially from 1 for determining the decomposition level.

As described above, after removing the components other than coherence signals from the frequency signal, the resultant signal is subjected to ordinary frequency analysis, thereby detecting the thicknesses of respective layers of the thin film. As the frequency analysis, there may be adopted such a processing in which the frequency components are subjected, for example, to fast Fourier transform (FFT) as one of statistic analyses therefor as described in Japanese Patent Application Laid-Open (KOKAI) No. 11-51618(1999). In addition, the frequency analysis may also be conducted by maximum entropy method (MEM). The maximum entropy method is such a method in which the peak spectrum required for determining the thickness is estimated from the waveform signals (the above detail signals) using an estimated model represented by n-order differential equation. The maximum entropy method is more excellent in frequency resolution as compared to the fast Fourier transform.

Upon the arithmetic processing for obtaining the layer thickness d, the interpretation of the peak of the power spectrum is conducted on the basis of the model approximated by the following formula (4) from the data obtained by fast Fourier transform or Maximum Entropy Method after wavelet processing.

Upon the arithmetic processing for obtaining the layer thickness d, the interpretation of the peak of the power spectrum (for example, determination of the peak obtained by synthesizing any two of the layers) is conducted on the basis of the model approximated by the following formula (4) from the data obtained by fast Fourier transform or Maximum Entropy Method after wavelet processing.

$$R \cong r_1 + r_2 \exp(-2i\delta_1) + r_3 \exp\{-2i(\delta_1+\delta_2)\} + \ldots +$$

$$r_{n+1} \exp\{-2i(\delta_1 + \delta_2 + \cdots + \delta_N)\} \qquad (4)$$

Next, the following formula is established as to the j-th peak position, a whole thickness is readily obtained by known method and apparatus, and the refractive indices $n_j$ of the respective layers are known. Therefore, the respective layers of the thin film can be sequentially calculated according to the following formula (5).

$$2\sum_{i=0}^{j} n_i d_i = 1/\Delta\sigma \qquad (5)$$

$$\Delta\sigma = (M/kj)\cdot 1$$

wherein M is the number of signals; kj is the j-th peak position; and 1 is a resolution (= measuring wave number range/data number contributing to processing).

As described above, in the thickness-measuring method and apparatus according to the present invention, after the reflection spectrum obtained from the sample (7) is transformed into the frequency signal, the resultant frequency signal is first subjected to wavelet processing to remove components other than coherence signals such as absorption spectrum of the sample (7) from the frequency signal, thereby manifesting or revealing the trace peak signal buried in a low-frequency range so that such a peak signal can be directly detected. Accordingly, the thicknesses of the respective layers on the surface of the extremely thin sample (7) which have, for example, a thickness as small as 0.4 to 1.5 μm, can be measured at a higher accuracy and instantaneously. As a result, even when the sample (7) is moved at a speed as high as 300 m/min, the thicknesses of respective layers thereof can be measured at a high accuracy. Meanwhile, in the present invention, in addition to the reflected light, a transmitted light that is transmitted through the sample may also be used to measure the layer thickness of the thin film.

While transporting a transparent functional resin film having a three-layer structure at a speed of 100 m/min, the thicknesses of respective layers thereof were measured using the thickness-measuring method and apparatus of the present invention. As a result, a power spectrum as shown in Fig. 4 was obtained by the wavelet processing. Further, from respective peaks of such a power spectrum, a thickness of the first layer located on the surface side of the film, a total thickness of the first and second layers, and a whole thickness of the film were determined. In addition, it was confirmed that the thicknesses of the first to third layers were 5.4 μm, 5.2 μm and 4.1 μm, respectively.

According to the present invention, after a spectrum of a reflected or transmitted light obtained from a sample is transformed into a frequency signal, the resultant frequency signal is first subjected to wavelet processing to remove components other than coherence signals from the frequency signal, thereby manifesting or revealing a trace peak signal buried in a low-frequency range and then directly detecting such a peak signal. Therefore, it is possible to measure thicknesses of respective layers on the surface of the extremely thin sample at a still higher accuracy and instantaneously, and further measure thicknesses of respective layers of even a sample in production line non-destruct at a high accuracy.

**Claims**

1. A method for measuring thicknesses of respective layers of a multilayer thin film, comprising:

   irradiating a white light on a sample composed of the multilayer thin film;
   spectrally dispersing a reflected light or transmitted light obtained from the sample, and transforming the resultant spectrum into a frequency signal based on wave number units; and
   subjecting the frequency signal to wavelet processing for removing components other than coherence signals from the frequency signal, and then to frequency analysis for detecting the thicknesses of the respective layers of the thin film.

2. A method according to claim 1, wherein the frequency analysis is a processing conducted by a fast Fourier transform processing.

3. A method according to claim 1, wherein the frequency analysis is a processing conducted by a maximum entropy method.

4. A method according to claim 1, wherein the white light is irradiated to the sample such that a spot diameter thereof is 0.5 to 1.5 mm.

5. A method according to claim 4, wherein the white light is irradiated to the sample using a stroboscope as a light source such that the sample is exposed to the light for 5 to 15 μsec.

6. A method according to claim 4, wherein the spectrum obtained by the spectral dispersion is transformed into the frequency signal using a CCD sensor having plural rows of pixel arrays, the frequency signal being obtained by integrating peaks of the spectrum by the number of the plural rows of pixel arrays.

7. A method according to claim 5, wherein the spectrum obtained by the spectral dispersion is transformed into the frequency signal using a CCD sensor having plural rows of pixel arrays, the frequency signal being obtained by integrating peaks of the spectrum by the number of the plural rows of pixel arrays.

8. An apparatus for measuring thicknesses of respective layers of a multilayer thin film, comprising a light source emitting a white light; an irradiating optical fiber for irradiating the light emitted from the light source onto a sample; a light-receiving optical fiber for collecting a reflected light or transmitted light obtained from the sample; a monochromator for spectrally dispersing the light transmitted from the light-receiving optical fiber; a multi-channel detector for transforming a spectrum obtained by spectrally dispersing the light, into an electric signal; and an arithmetic processing means for transforming the electric signal output from the multi-channel detector into a frequency signal based on wave number units and subjecting the frequency signal to an arithmetic processing, said arithmetic processing means having a function for subjecting the frequency signal to wavelet processing for removing components other than coherence signals from the frequency signal, and then to frequency analysis for detecting the thicknesses of respective layers of the thin film.

9. An apparatus according to claim 8, wherein the white light is irradiated to the sample such that a spot diameter thereof is 0.5 to 1.5 mm.

10. An apparatus according to claim 8, wherein the white light is irradiated to the sample using a stroboscope as a light source such that the sample is exposed to the light for 5 to 15 μsec.

11. An apparatus according to claim 9, wherein the multi-channel detector comprises a CCD sensor for transforming the spectrum into the electric signal, the CCD sensor having plural rows of pixel arrays and transforming the spectrum into such a signal obtained by integrating respective peaks of the spectrum by the number of the plural rows of pixel arrays.

12. An apparatus according to claim 10, wherein the multi-channel detector comprises a CCD sensor for transforming the spectrum into the electric signal, the CCD sensor having plural rows of pixel arrays and transforming the spectrum into such a signal obtained by integrating respective peaks of the spectrum by the number of the plural rows of pixel arrays.

**FIG.1**

4: MONOCHROMATOR

5: MULTI-CHANNEL DETECTOR

6: ARITHMETIC PROCESSING MEANS

3

BIFURCATED FIBER

(MULTI - CHANNEL SPECTROSCOPE)

2

1: WHITE LIGHT SOURCE

INCIDENT LIGHT L

REFLECTED LIGHT La

7: SAMPLE

# FIG.2

# FIG.3

**EXAMPLE OF WAVELET DECOMPOSITION OF SIGNAL**
$$s=a_5+d_5+d_4+d_3+d_2+d_1$$

**LIGHT QUANTITY (au)**

**WAVE NUMBER** ($\mu$m$^{-1}$)

11

# FIG.4

POWER SPECTRUM BY MEM PROCESSING AFTER WAVELET PROCESSING

No.1~THICKNESS OF FIRST LAYER

No.2~TOTAL THICKNESS OF FIRST AND SECOND LAYERS

No.3~WHOLE THICKNESS OF 3 LAYERS

EP 1 467 177 A1

**European Patent Office**

**EUROPEAN SEARCH REPORT**

Application Number

EP 04 00 8424

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A,D | PATENT ABSTRACTS OF JAPAN<br>vol. 1996, no. 03,<br>29 March 1996 (1996-03-29)<br>-& JP 07 294220 A (MITSUBISHI CHEM CORP),<br>10 November 1995 (1995-11-10)<br>* abstract; figures 1-6 *<br>--- | 1-12 | G01B11/06 |
| A | WO 00/12958 A (NOUR OFER DU ;TEVET PROCESS CONTROL TECHNOLO (IL))<br>9 March 2000 (2000-03-09)<br>* page 8, line 21 - page 12, line 7;<br>figures 3-13 *<br>--- | 1-12 | |
| A | PATENT ABSTRACTS OF JAPAN<br>vol. 011, no. 270 (P-611),<br>3 September 1987 (1987-09-03)<br>-& JP 62 071804 A (NIPPON KOGAKU KK),<br>2 April 1987 (1987-04-02)<br>* abstract; figures 1-10 *<br>--- | 1-12 | |
| A | US 6 119 026 A (MCNULTY CHRIS  ET AL)<br>12 September 2000 (2000-09-12)<br>* column 1, line 25-42 *<br>* column 2, line 25-41 *<br>* column 3, line 23 - column 12, line 35;<br>figures 1-13 *<br>--- | 1,8 | TECHNICAL FIELDS SEARCHED (Int.Cl.7)<br><br>G01B |
| A | US 5 400 265 A (KAUPPINEN JYRKI)<br>21 March 1995 (1995-03-21)<br>* abstract; figure 6 *<br>* column 1, line 5-58 *<br>--- | 3 | |

-/--

The present search report has been drawn up for all claims

| Place of search | Date of completion of the search | Examiner |
|---|---|---|
| MUNICH | 15 July 2004 | Beyfuß, M |

**European Patent Office**

## EUROPEAN SEARCH REPORT

Application Number

EP 04 00 8424

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | KAWATA S ET AL: "SUPERRESOLUTION OF FOURIER TRANSFORM SPECTROSCOPY DATA BY THE MAXIMUM ENTROPY METHOD" APPLIED OPTICS, OPTICAL SOCIETY OF AMERICA,WASHINGTON, US, vol. 22, no. 22, 1983, pages 3593-3598, XP000885222 ISSN: 0003-6935 * the whole document * | 3 | |
| | | | TECHNICAL FIELDS SEARCHED (Int.Cl.7) |

The present search report has been drawn up for all claims

| Place of search | Date of completion of the search | Examiner |
|---|---|---|
| MUNICH | 15 July 2004 | Beyfuß, M |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.** EP 04 00 8424

This annex lists the patent family members relating to the patent documents cited in the above-mentioned European search report.
The members are as contained in the European Patent Office EDP file on
The European Patent Office is in no way liable for these particulars which are merely given for the purpose of information.

15-07-2004

| Patent document cited in search report | | Publication date | Patent family member(s) | | Publication date |
|---|---|---|---|---|---|
| JP 07294220 | A | 10-11-1995 | NONE | | |
| WO 0012958 | A | 09-03-2000 | IL | 125964 A | 31-10-2003 |
| | | | AU | 5385599 A | 21-03-2000 |
| | | | CA | 2341403 A1 | 09-03-2000 |
| | | | CN | 1314991 T | 26-09-2001 |
| | | | EP | 1110054 A1 | 27-06-2001 |
| | | | WO | 0012958 A1 | 09-03-2000 |
| | | | JP | 2002523763 T | 30-07-2002 |
| | | | NO | 20010910 A | 27-04-2001 |
| JP 62071804 | A | 02-04-1987 | NONE | | |
| US 6119026 | A | 12-09-2000 | NONE | | |
| US 5400265 | A | 21-03-1995 | FI | 910782 A | 19-08-1992 |
| | | | WO | 9214997 A1 | 03-09-1992 |

EPO FORM P0459

For more details about this annex : see Official Journal of the European Patent Office, No. 12/82